# EUROPÄISCHE PATENTANMELDUNG

(11) **EP 1 206 957 A1**
(43) Veröffentlichungstag der Anmeldung: **22.05.2002**
(21) Anmeldenummer: 01127158.2
(22) Anmeldetag: 15.11.2001
(51) Int. Cl.: B01D 33/06, B01D 33/00, B01D 29/05

(54) **Filterplatte, Verfahren zur Herstellung der Filterplatte, Verwendung der Filterplatte in einem Drehfilter**

(30) Priorität: 15.11.2000 DE 10056518
(71) Anmelder: BHS-Sonthofen Maschinen- und Anlagenbau GmbH, 87527 Sonthofen (DE)
(72) Erfinder: Tichy, Josef W., 87527 Sonthofen (DE)
(74) Vertreter: Herzog, Markus, Dipl.-Phys. Dr.

(57) **Zusammenfassung**

Eine Filterplatte (10) umfasst einen Grundkörper (12) mit wenigstes einem Strömungsweg (16) für zu filterndes Fluid und eine in dem wenigstens einen Strömungsweg (16) angeordnete, mit dem Grundkörper (12) verbundene Filtermittelanordnung (14). Erfindungsgemäß ist die Filtermittelanordnung (14) mit dem Filterplatten-Grundkörper (12) durch Sintern, Löten oder Kleben verbunden. Ferner werden ein Verfahren zur Herstellung dieser Filterplatte und deren Verwendung in einem Drehfilter angesprochen.

## Beschreibung

Die Erfindung betrifft eine Filterplatte, die einen Grundkörper mit wenigstes einem Strömungsweg für zu filterndes Fluid und eine in dem wenigstens einen Strömungsweg angeordnete, mit dem Grundkörper verbundene Filtermittelanordnung umfasst.

Derartige Filterplatten werden beispielsweise in Drehfiltern zum Abtrennen von feinen Feststoffen aus Suspensionen mittels Vakuumfiltration, Druckfiltration oder kombinierter Vakuum-Druck-Filtration eingesetzt, wie sie etwa aus der DE-PS 878 795 und der DE-PS 922 226 bekannt sind. Diese Filter arbeiten zulaufseitig mit Überdruck oder/und ablaufseitig mit Unterdruck (bzw. Vakuum) zur Bereitstellung einer treibender Druckdifferenz zum Trennen von Feststoffen aus Suspensionen. Zum Einsatz in diesen Drehfiltern bekannte Filterplatten sind zum Beispiel in der DE 37 32 188 C1 und der DE 38 25 605 C2 offenbart.

Ferner ist von derartigen Drehfiltern auch der Einsatz mehrlagiger Metallgewebe als Filtermittel bekannt.

Diese Metallgewebe können gemäß einer ersten Alternative mittels einer Bespannungsschnur an dem Filterplatten-Grundkörper befestigt werden. Diese Befestigungsart ist jedoch in mehrfacher Hinsicht nachteilig. Zum einen erfordert sie einen relativ aufwändigen Arbeitsschritt. Zum anderen entstehen durch diese Befestigungsmethode Falten und Taschen in den aufgebrachten Filtermitteln, die bei der Filtration Depots für Feststoffe bilden, die nicht mehr aus dem Filter ausgetragen und auch bei einer Waschung mit Hochdruck-Reinigungsvorrichtungen nicht mehr sicher aus dem Filter entfernt werden können. In der DE 37 32 188 C1 und der DE 38 25 605 C2 wurde daher der Einsatz von speziell vorgeformten und daher recht kostspieligen Filtermittelanordnungen empfohlen.

Gemäß einer zweiten Alternative, die zwar in der Praxis zum Einsatz kommt, in den genannten Patentschriften aber nicht näher beschrieben ist, kann das Filtermittel auch durch Schweißen mit dem Filterplatten-Grundkörper verbunden werden. Der Vorteil des Schweißens liegt vor allem in der festen und sicheren Verbindung von Filtermittelanordnung und Filterplatten-Grundkörper, die auch nach langer Betriebsdauer einen zuverlässigen Betrieb des Filters bzw. der Filterplatte gewährleistet.

Das Verschweißen von Filtermittelanordnung und Filterplatten-Grundkörper ist bei Metallgeweben insbesondere dann möglich, wenn die Filtermittelanordnung und der Filterplatten-Grundkörper aus ähnlichen metallischen Werkstoffen gefertigt sind, die miteinander verschweißt werden können, zum Beispiel aus austenitischen Edelstählen, hochlegierten Nickelmetalllegierungen (zum Beispiel unter dem Namen "Hastelloy" bekannt) oder anderen metallischen Werkstoffen. Nachteilig ist bei der Befestigung der Filtermittel durch Schweißen jedoch, dass nur Gewebe mit einer minimalen Maschen- bzw. Porenweite von etwa 5 µm bis 20 µm verwendet werden können. Dünnere Gewebe nehmen nämlich beim Aufschweißen Schaden, weil durch die starken Materialdicken-Unterschiede die dünnen Fäden der Filtermittel-Gewebe durch das flüssige Schweißgut so weit angeschmolzen werden, dass die Möglichkeit des Durchschmelzens und somit der Entstehung einer Schadstelle im Gewebe besteht.

Zur Umgehung dieses Problems ist es bekannt, Verbundgewebe oder sintermetallische Filtermittel zu verwenden.

Die genannten Verbundgewebe können beispielsweise einen Schichtaufbau aufweisen. Dabei kommt auf eine sehr grobe Gewebelage eine feinere, darauf eine noch feinere und üblicherweise in der dritten oder vierten Lage eine besonders feine Lage Metallgewebe, die das eigentliche Filtermittel darstellt. Darüber hinaus sind Varianten bekannt, bei denen auf den genannten Lagen als Schutzschicht noch eine grobere Gewebelage angeordnet wird, die zum einen die Aufgabe hat, das sehr feine Filtergewebe gegen alle möglichen Arten von Beschädigungen zu schützen, und zum anderen zum Anschweißen des Verbundgewebes an den Filterplatten-Grundkörper dient.

Es ist weiterhin Stand der Technik, diese Gewebe durch Hitzeeinwirkung miteinander zu verbinden, wobei die Gewebe an den Berührungsstellen der Gewebe aufschmelzen, d.h. durch Sintern oder dergleichen Verbindungsmethoden. Dabei ist es ferner bekannt, die Gewebe vor der Bildung des Schichtaufbaus zwischen zwei starren, harten Walzen an ihrer Ober- und Unterseite etwas flachzupressen, d.h. zu kalandern, sodass die Größe und gegebenenfalls auch die Anzahl der Berührungsstellen für die anschliessende thermische Verbindung ansteigt. Durch das Kalandern kann ferner die Porenweite der Gewebe bis auf wenige Mikrometer verringert werden.

Sowohl das Weben von sehr feinen Metallgeweben als auch das Kalandern bringt wegen der begrenzten Festigkeit, speziell der begrenzten Zerreißfestigkeit von feinsten Metallfäden, erhebliche Probleme mit sich. Deshalb ist der Einsatz von Metallgewebe auf einen Bereich von wenigen Mikrometern Porenweite und mehr begrenzt; feinere Gewebe werden nicht hergestellt.

Zum Abfiltern von sehr feinen Feststoffen, d.h. Feststoffen, für die Porenweiten von weniger als 1 µm erforderlich sind, werden daher üblicherweise die vorstehend angesprochenen sintermetallische Werkstoffe verwendet. Zur Herstellung dieser Filtermittel wird feinstes Sinterpulver zu porösen, keramikähnlichen Platten gepresst und anschließend gesintert.

Wie vorstehend angedeutet, können sowohl Verbundgewebe, vorzugsweise gesinterte Verbundgewebe, als auch sintermetallische Filtermittel ähnlich wie Blechplatten verschweißt werden. Sie können daher als Ersatz für eine entfernbare Bespannung mit Textil- oder Metallgewebe zum Abdecken von Filterplatten-Grundkörpern eingesetzt und auf diese Filterplatten-Grundkörper aufgeschweißt werden.

Nachteilig beim Aufschweißen der Filtermittel ist aber ganz allgemein der starke thermische Einfluss auf das Material der Filtermittelanordnung und des Filterplatten-Grundkörpers. Und dies insbesondere dann, wenn austenitische Chrom-Nickelstähle verwendet werden, weil durch den thermischen Einfluss der metallurgisch und korrosionstechnisch wünschenswerte Austenit in andere, weniger korrosionsresistente Metallformen übergehen kann. Es müssen daher anschließend die korrosionsempfindlichen Anlauffarben entfernt werden. Außerdem ist der Schweißvorgang mitunter so schwierig, dass die Schweißnaht uneben wird und durch ihre Rauhigkeit den guten Feststoffabwurf nach der Filtration bzw. der Reinigung nach dem Feststoffabwurf in Frage stellt.

Besonders nachteilig sind die beiden vorstehend diskutierten Befestigungsmethoden für Filtermittelanordnungen auf Filterplatten-Grundkörpern dann, wenn die so hergestellten Filterplatten bzw. Filter in Produktionsanlagen eingesetzt werden, bei denen es auf höchste Reinheit der Apparate vor und nach einem Arbeitseinsatz ankommt, also beispielsweise bei biologischen und pharmazeutischen Anwendungen. Hier ist eine Verschleppung von Feststoffen von einem Arbeitsgang in den nächsten nicht tolerierbar. Aber auch beim Einsatz der Filterplatten zur Filtration von Farbstoffen ist eine gute Reinigbarkeit immer dann gefordert, wenn in aufeinanderfolgenden Kampagnen verschiedene Farben auf ein und demselben Apparat verarbeitet werden. Eine Verschleppung von Farbstoffen von einer Kampagne in die nächste führt naturgemäß zu einer Qualitätsminderung.

Aufgabe der Erfindung ist es daher, die gattungsgemäße Filterplatte so weiterzubilden, dass auch bei geringer Porenweite der Filtermittelanordnung eine Beschädigung oder eine anderweitige nachteilige Beeinflussung der Filtermittelanordnung bei der Herstellung der Filterplatte vermieden werden kann, und dies vorzugsweise bei guter Filterkuchen-Abwurfeigenschaft und guter Reinigbarkeit der Filterplatte.

Diese Aufgabe wird erfindungsgemäß durch eine Filterplatte der eingangs genannten Art gelöst, bei welcher die Filtermittelanordnung mit dem Filterplatten-Grundkörper durch Sintern, Löten oder Kleben verbunden ist. Selbst beim Sintern oder Löten wird das Material der Filtermittelanordnung einer geringeren thermischen Belastung ausgesetzt als bei dem bekannten Schweißen. Darüber hinaus ist bei allen diesen Verbindungsarten der Erhalt des ursprünglichen hochkorrosionsresistenten Werkstoffgefüges gesichert. Schließlich hat es sich überraschenderweise gezeigt, dass trotz der im Vergleich zu einer Schweißverbindung vermeintlich geringeren Verbindungsstärke von Sintern, Löten und Kleben ein sicherer Betrieb der Filterplatte auch nach längerer Einsatzdauer zuverlässig gewährleistet ist.

Wie bei der Diskussion des Standes der Technik bereits angedeutet, kann die Filtermittelanordnung wenigstens eine aus einem Filtergewebe gebildete Filtermittellage oder/und wenigstens eine aus porösem Sinterwerkstoff, beispielsweise Sintermetall oder Sinterkeramik, gebildete Filtermittellage umfassen.

Gemäß einer ersten Ausführungsvariante kann die Filtermittelanordnung einen Schichtaufbau aus einer Mehrzahl von Gewebelagen unterschiedlicher Feinheit umfassen. Beispielsweise kann der Schichtaufbau zumindest dreilagig ausgebildet sein mit einer groben Gewebelage, einer feineren Gewebelage und einer besonders feinen Gewebelage, wobei die Feinheit der Gewebelagen des Schichtaufbaus vorzugsweise zum Filterplatten-Zulauf hin zunimmt, d.h. entgegen der Strömungsrichtung des zu filternden Fluids. Auf diese Weise dient die feinste Gewebelage als das eigentliche Filtermittel, während die gröberen Gewebelagen zum einen als Stützgitter für die feinste Gewebelage dienen und zum anderen ein Ansammeln von Feststoffen in der Filtermittelanordnung verhindern. Der Schichtaufbau kann zulaufseitig zusätzlich mittels einer gröberen Gewebelage abgedeckt sein, welche die als das eigentliche Filtermittel dienende Gewebelage vor Beschädigung schützt.

Bei dieser ersten Ausführungsvariante brauchen nicht alle Gewebelagen, d.h. braucht nicht der gesamte Schichtaufbau, mit dem Grundkörper durch Sintern bzw. Kleben bzw. Löten verbunden zu sein. Vielmehr genügt es, wenn die als das eigentliche Filtermittel dienende Gewebelage oder die zusätzliche gröbere Gewebelage mit einer Filtermittel-Auflagefläche des Filterplatten-Grundkörpers verbunden ist.

Wenigstens eine der Gewebelagen, insbesondere die mit dem Grundkörper verbundene Gewebelage, kann aus Metallgewebe gefertigt sein, bzw. sollte aus Metall gefertigt sein, wenn die Verbindung zwischen der Filtermittelanordnung und dem Grundkörper durch Sintern oder Löten hergestellt wird.

Gemäß einer zweiten Ausführungsvariante kann die Filtermittelanordnung einen Schichtaufbau aus einer Mehrzahl von Sinterwerkstofflagen unterschiedlicher Feinheit umfassen. Dabei kann eine eher grobe Schicht Sinterwerkstoff eine Grundschicht bilden, auf der eine Deckschicht aus besonders feinem Sinterwerkstoff aufgebracht ist. Alternativ kann die Grundschicht aber auch von einer eher groben Schicht Sinterwerkstoff und wenigstens einer darauf abgelagerten feineren Schicht Sinterwerkstoff gebildet sein. In beiden Fällen können alle Schichten und die Filterplatte miteinander beispielsweise durch Sintern verbunden sein. Gemäß Vorstehendem kann also auch gemäß dieser zweiten Ausführungsvariante die Feinheit der Sinterwerkstofflagen des Schichtaufbaus zum Filterplatten-Zulauf hin zunehmen, d.h. entgegen der Strömungsrichtung des zu filternden Fluids.

Grundsätzlich ist es jedoch auch möglich, die beiden vorstehend diskutierten Ausführungsvarianten miteinander zu kombinieren, indem man beispielsweise auf einer Grundschicht aus Sinterwerkstoff, insbesondere Sintermetall, ein feines Metallgewebe als das eigentliche Filtermedium vorsieht.

Nach einem weiteren Gesichtspunkt betrifft die Erfindung ferner ein Verfahren zur Herstellung einer erfindungsgemäßen Filterplatte.

In Weiterbildung dieses Herstellungsverfahrens kann vorgesehen sein, dass der Filterplatten-Grundkörperoder/und die wenigstens eine Filtergewebelage oder/und die wenigstens eine Sinterwerkstofflage vor deren Verbinden einer Oberflächenbehandlung unterzogen werden, um eine besonders glatte, schmutzabweisende Oberfläche zu erhalten. Diese Oberflächenbehandlung kann beispielsweise eine Elektropolitur umfassen oder/und in der Aufbringung einer schmutzabweisenden Oberflächenbeschichtung bestehen. Zusätzlich oder alternativ kann die zuströmseitige Oberfläche der Filtermittelanordnung nach dem Verbinden des Filterplatten-Grundkörpers und der Filtermittelanordnung überdreht oder/und überschliffen werden, um eine glatte Oberfläche bereitzustellen.

Schließlich betrifft die Erfindung auch noch die Verwendung einer erfindungsgemäßen Filterplatte in einem Drehfilter. Insbesondere kann die erfindungsgemäße Filterplatte in Drehfiltersektionen eingesetzt werden, in denen der Filterkuchen mit Dampf behandelt, d.h. mit Dampf ausgewaschen oder/und mittels Dampf entwässert wird. Ferner eignet sich die erfindungsgemäße Filterplatte zum Einsatz in Drehfiltersektionen, in denen sie hochkorrosiven Beanspruchungen ausgesetzt ist.

Die Erfindung wird nachstehend an Ausführungsbeispielen anhand der beigefügten Zeichnungen näher erläutert. Es stellt dar:
- Figur 1: einen Teilschnitt durch eine erste Ausführungsform einer erfindungsgemäßen Filterplatte mit einer von einem Verbundgewebe gebildeten Filtermittelanordnung;
- Figur 2: eine vergrößerte Darstellung des Details A aus Fig. 1;
- Figur 3: eine Ansicht ähnlich Fig. 1 einer erfindungsgemäßen Filterplatte mit einem einfach aufgebauten Filterplatten-Grundkörper; und
- Figuren 4 und 5: Ansichten ähnlich Fig. 1 erfindungsgemäßer Filterplatten mit sintermetallischer Filtermittelanordnung.

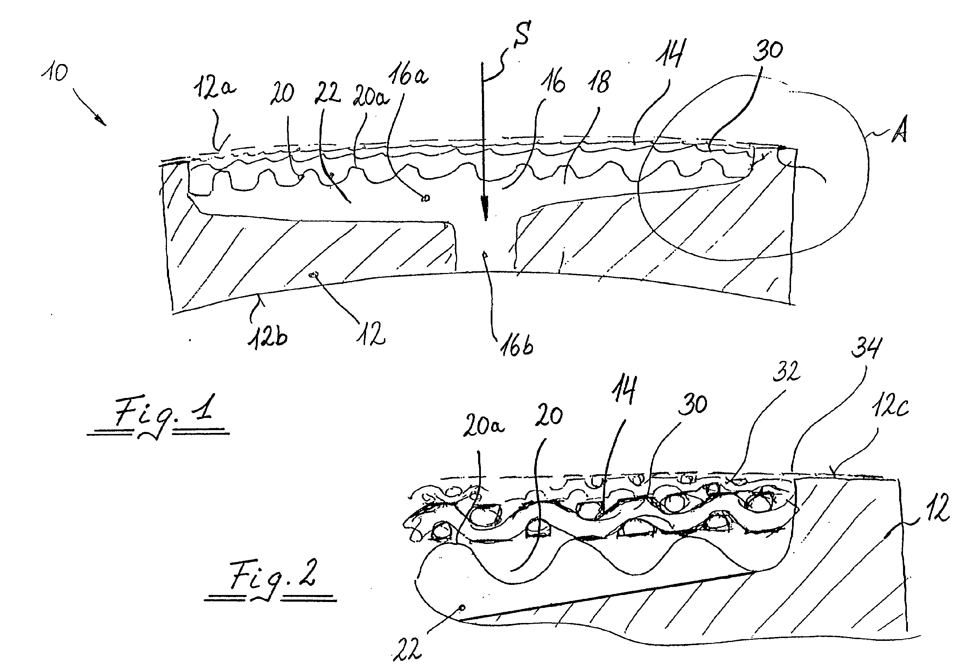

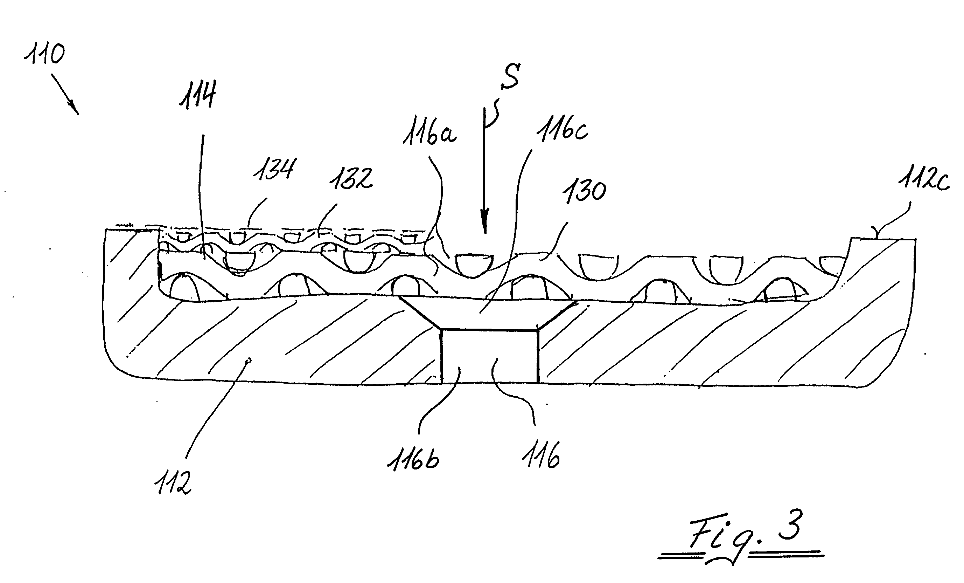

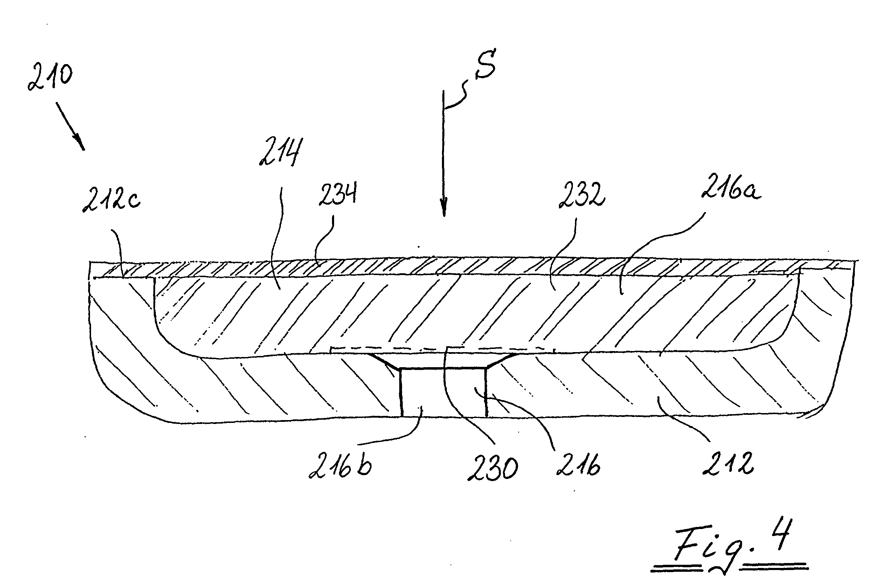

In Figur 1 ist eine erfindungsgemäße Filterplatte ganz allgemein mit 10 bezeichnet. Die Filterplatte 10 umfasst einen Filterplatten-Grundkörper 12, der beispielsweise als Edelstahl-Gussteil gefertigt sein kann, sowie eine Filtermittelanordnung 14.

Der Grundkörper 12 ist von einem Fluiddurchgang 16 durchsetzt, der sich von einer zuströmseitigen Oberfläche 12a des Grundkörpers 12 bis zu dessen abströmseitiger Oberfläche 12b erstreckt und so einen Strömungsweg für zu filterndes Fluid bildet. Ein zulaufseitiger, d.h. an die Oberfläche 12a angrenzender Abschnitt 16a des Strömungswegs 16 ist zur Aufnahme der Filtermittelanordnung 14 erweitert ausgebildet, während ein abströmseitiger Abschnitt 16b des Strömungswegs 16 als Abströmkanal mit einem zum Anschluss an äußere Abschlussleitungen geeigneten Querschnitt ausgebildet ist. Am Boden der von dem Abschnitt 16a des Strömungswegs 16 gebildeten Aufnahmekammer 18 für die Filtermittelanordnung 14 sind Kannelierungen 20 ausgebildet, die einem geordneten, guten Filtratablauf dienen. Die Kannelierungen 20 münden in Sammelkanäle 22, welche zum Filtratablauf 16b führen.

Im dargestellten Ausführungsbeispiel ist die Filtermittelanordnung 14 von drei in bzw. entgegen der Strömungsrichtung S übereinander angeordneten Gewebelagen gebildet (siehe auch die Detaildarstellung gemäß Fig. 2). Eine grobmaschige Gewebelage 30 dient zum Abstützen der Filtermittelanordnung 14 auf den Spitzen 20a der Kannelierungen 20. Eine feinmaschige Gewebelage 34, die an dem der Oberfläche 12a des Grundkörpers 12 zugewandten Oberfläche der Filtermittelanordnung 14 angeordnet ist, dient als das eigentliche Filtermittel, auf dessen Oberfläche sich der Filterkuchen abscheidet. Zwischen der grobmaschigen Gewebelage 30 und der feinmaschigen Gewebelage 34 ist noch eine Gewebelage 32 mittlerer Maschen- bzw. Porenweite angeordnet. Die Aufgabe dieser Gewebelage 32 ist es hauptsächlich, den großen Maschenweitensprung zwischen den Gewebelagen 30 und 34 auszugleichen, der zu unerwünschten Verwerfungen der feinmaschigen Gewebelage 34 führen könnte.

Wie man in Fig. 2 am Beispiel der Gewebelage 30 und 32 erkennt, wurden diese an ihrer Oberseite und ihrer Unterseite jeweils durch Kalandern abgeflacht, d.h. durch Pressen zwischen zwei starren, harten Walzen. Des Weiteren erkennt man in Fig. 2, dass die feinmaschige Gewebelage 34 einen größeren Zuschnitt aufweist als die Gewebelagen 30 und 32. Und zwar ist die Gewebelage 34 so groß zugeschnitten, dass sie zum einen eine Filtermittel-Auflagefläche 12c des Grundkörpers 12 überdeckt, zum anderen aber nicht seitlich über den Grundkörper 12 hinausragt.

Ist die Gewebelage 34 aus Metall gefertigt, so kann sie mit dem Grundkörper 12 im Bereich dessen Auflagefläche 12c in einfacher Weise durch Sintern verbunden werden. Dabei ist es grundsätzlich möglich, dass die zur Stützung der feinmaschigen Gewebelage 34 dienenden gröbermaschigen Gewebelagen 30 und 32 lose in der Filtermittel-Aufnahmekammer 18 angeordnet sind. Zur Erhöhung der Gesamtstabilität und der Betriebssicherheit der Filterplatte 10 ist es jedoch bevorzugt, wenn auch die Gewebelagen 30 und 32 mit dem Grundkörper 12 bzw. der feinmaschigen Gewebelage 34 verbunden sind.

Sind die Gewebelagen 30 und 32 ebenfalls aus Metall gebildet, so können sie in einem ersten Arbeitsschritt mit der Gewebelage 34 zur Bildung der Filtermittelanordnung 14 gesintert werden, was durch das vorherige Kalandern der Gewebelagen erleichtert wird. Durch anschließendes nochmaliges Sintern kann man die so erhaltene Filtermittelanordnung 14 mit dem Grundkörper 12 verbinden. Es ist jedoch auch möglich, die Gewebelagen 30, 32 und 34 in einem einzigen Sintervorgang miteinander und mit dem Grundkörper 12 zu verbinden.

Zusätzlich oder alternativ zum Sintern kann die Verbindung der Gewebelagen 30, 32 und 34 und des Grundkörpers 12 vollständig oder teilweise auch durch Löten oder Kleben erfolgen.

Zur Sicherung der späteren Verwendbarkeit der Filterplatte in hochreinen Betriebsumgebungen können die Gewebelagen 30, 32 und 34 und der Grundkörper 12 oder zumindest einige dieser Teile oberflächenbehandelt werden, so dass eine besonders glatte, schmutzabweisende Oberfläche entsteht. Ein Beispiel für eine derartige Oberflächenbehandlung ist die Durchführung einer Elektropolitur.

Die Ausführungsform gemäß Fig. 3 unterscheidet sich von der Ausführungsform gemäß Fig. 1 und 2 lediglich dadurch, dass der Grundkörper 112 dieser Filterplatte 110 einen besonders einfachen Aufbau aufweist, da auf die Ausbildung von Kannelierungen und Sammelkanälen verzichtet wurde. Der Fluidkanal 116 ist lediglich im Übergangsbereich 116c zwischen dem erweiterten Abschnitt 116a und dem Ablaufabschnitt 116b mit einem sich entgegen der Strömungsrichtung S erweiternden Übergangsabschnitt 116c ausgebildet. Hinsichtlich des Aufbaus der Filtermittelanordnung 114 aus den Gewebelagen 130, 132 und 134 und deren Verbindung mit dem Grundkörper 112 über die Gewebelage 134 im Bereich der Auflagefläche 112c sei auf die Beschreibung der Ausführungsform gemäß Fig. 1 und 2 verwiesen.

In Fig. 4 ist eine Filterplatte 210 dargestellt, deren Filtermittelanordnung 214 als Sinterwerkstoff-Verbundplatte, insbesondere Sintermetall-Verbundplatte, ausgebildet ist. Diese Verbundplatte umfasst entgegen der Strömungsrichtung S, d.h. vom Ablaufabschnitt 216b zum Zulaufabschnitt 216a des Strömungswegs 216 hin, zunächst einen Abschnitt 230, der aus grobem Drainagematerial gebildet ist. Über dieser Drainageschicht 230 ist eine weitere, feinere Drainageschicht 232 angeordnet, die aber immer noch aus vergleichsweise grobem und somit gute Drainageeigenschaft aufweisenden Sintermaterial gefertigt ist. Die eigentliche Filtermittel-Schicht 234 ist aus einem besonders feinen, der Anforderung nach guter Filterfeinheit entsprechend gewählten Sintermaterial gefertigt. Wie bei den vorstehend beschriebenen Ausführungsformen erstreckt sich diese eigentliche Filterschicht 234 bis in den Bereich der Auflageflächen 212c des Filterplatten-Grundkörpers 212 und ist dort mit diesem verbunden. Gleichwohl verbinden sich auch die Drainageschichten 232 und 230 beim Sintern mit dem Grundkörper 212.

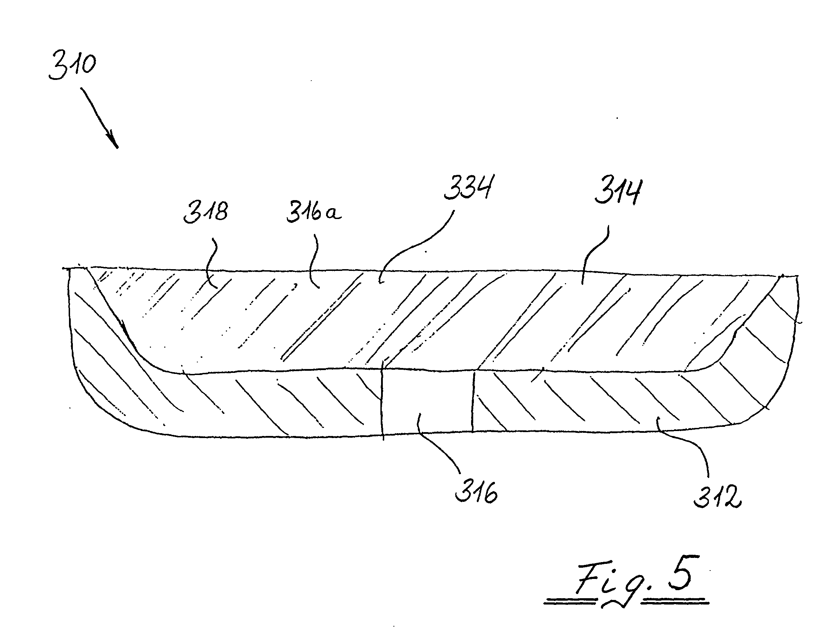

Eine besonders einfache Ausführungsform einer Filterplatte 310 mit einer aus Sintermaterial hergestellten Filtermittelanordnung 314 ist in Fig. 5 dargestellt. Bei dieser Ausführungsform ist in den erweiterten Abschnitt 316a des Fluidströmungswegs 316 bzw. in die Filtermittelaufnahmekammer 318 des Filterplatten-Grundkörpers 312 eine einzige Schicht 334 aus porösem Sintermaterial eingebracht und mit dem Grundkörper 312 durch Sintern verbunden.

## Patentansprüche

1. Filterplatte (10; 110; 210; 310), umfassend
- einen Grundkörper (12; 112; 212; 312) mit wenigstes einem Strömungsweg (16; 116; 216; 316) für zu filterndes Fluid, und
- eine in dem wenigstens einen Strömungsweg (16; 116; 216; 316) angeordnete, mit dem Grundkörper (12; 112; 212; 312) verbundene Filtermittelanordnung (14; 114; 214; 314),
**dadurch gekennzeichnet, dass** die Filtermittelanordnung (14; 114; 214; 314) mit dem Filterplatten-Grundkörper (12; 112; 212; 312) durch Sintern, Löten oder Kleben verbunden ist.

2. Filterplatte nach Anspruch 1,
**dadurch gekennzeichnet, dass** die Filtermittelanordnung (14; 114) wenigstens eine aus einem Filtergewebe gebildete Filtermittellage (30, 32, 34; 130, 132, 134) umfasst.

3. Filterplatte nach Anspruch 2,
**dadurch gekennzeichnet, dass** die Filtermittelanordnung (14; 114) einen Schichtaufbau aus einer Mehrzahl von Gewebelagen (30, 32, 34; 130, 132, 134) unterschiedlicher Feinheit umfasst.

4. Filterplatte nach Anspruch 3,
**dadurch gekennzeichnet, dass** die Feinheit der Gewebelagen (30, 32, 34; 130, 132, 134) des Schichtaufbaus (14; 114) zum Filterplatten-Zulauf (16a; 116a) hin zunimmt.

5. Filterplatte nach Anspruch 2 oder 3,
**dadurch gekennzeichnet, dass** der Schichtaufbau (14; 114) zulaufseitig zusätzlich mittels einer gröberen Gewebelage abgedeckt ist.

6. Filterplatte nach Anspruch 3 oder 4 oder Anspruch 5,
**dadurch gekennzeichnet, dass** die zulaufseitig endständige Gewebelage (34; 134) oder die zusätzliche gröbere Gewebelage mit einer Filtermittel-Auflagefläche (12c; 112c) des Filterplatten-Grundkörpers (12; 112) verbunden ist.

7. Filterplatte nach einem der Ansprüche 2 bis 6,
**dadurch gekennzeichnet, dass** wenigstens eine der Gewebelagen (30, 32, 34; 130, 132, 134) aus Metallgewebe gefertigt ist.

8. Filterplatte nach einem der Ansprüche 1 bis 7,
**dadurch gekennzeichnet, dass** die Filtermittelanordnung (214; 314) wenigstens eine aus porösem Sinterwerkstoff, vorzugsweise Sintermetall oder Sinterkeramik, gebildete Filtermittellage (230, 232, 234; 334) umfasst.

9. Filterplatte nach Anspruch 8,
**dadurch gekennzeichnet, dass** die Filtermittelanordnung (214) einen Schichtaufbau aus einer Mehrzahl von Sinterwerkstofflagen (230, 232, 234) unterschiedlicher Feinheit umfasst.

10. Filterplatte nach Anspruch 9,
**dadurch gekennzeichnet, dass** die Feinheit der Sinterwerkstofflagen (230, 232, 234) des Schichtaufbaus zum Filterplatten-Zulauf (216a) hin zunimmt.

11. Verfahren zur Herstellung einer Filterplatte nach einem der vorhergehenden Ansprüche,
**dadurch gekennzeichnet, dass** man die Filtermittelanordnung (14; 114; 214; 314) mit dem Filterplatten-Grundkörper (12; 112; 212; 312) durch Sintern, Löten oder Kleben verbindet.

12. Verfahren nach Anspruch 11,
**dadurch gekennzeichnet, dass** der Filterplatten-Grundkörper (12; 112; 212; 312) oder/und die wenigstens eine Filtergewebelage (30, 32, 34; 130, 132, 134) oder/und die wenigstens eine Sinterwerkstofflage (230, 232, 234; 334) vor deren Verbinden einer Oberflächenbehandlung unterzogen werden.

13. Verfahren nach Anspruch 12,
**dadurch gekennzeichnet, dass** der Filterplatten-Grundkörper (12; 112; 212; 312) oder/und die wenigstens eine Filtergewebelage (30, 32, 34; 130, 132, 134) oder/und die wenigstens eine Sinterwerkstofflage (230, 232, 234; 334) vor deren Verbinden elektropoliert werden.

14. Verfahren nach Anspruch 12 oder 13,
**dadurch gekennzeichnet, dass** der Filterplatten-Grundkörper (12; 112; 212; 312) oder/und die wenigstens eine Filtergewebelage (30, 32, 34; 130, 132, 134) oder/und die wenigstens eine Sinterwerkstofflage (230, 232, 234; 334) vor deren Verbinden mit einer schmutzabweisenden Oberflächenbeschichtung versehen werden.

15. Verfahren nach einem der Ansprüche 11 bis 14,
**dadurch gekennzeichnet, dass** die zuströmseitige Oberfläche der Filtermittelanordnung nach dem Verbinden des Filterplatten-Grundkörpers (12; 112; 212; 312) und der Filtermittelanordnung überdreht oder/und überschliffen wird.

16. Verwendung wenigstens einer Filterplatte (10; 110; 210; 310) nach einem der Ansprüche 1 bis 10 in einem Drehfilter für feine Filtermittel zum Abtrennen von feinen Feststoffen aus Suspensionen mittels Druck-Filtration, Vakuum-Filtration oder kombinierter Vakuum-Druck-Filtration.
